# EUROPÄISCHE PATENTSCHRIFT

(11) **EP 2 497 659 B1**
(45) Veröffentlichungstag und Bekanntmachung des Hinweises auf die Patenterteilung: **04.09.2013**
(21) Anmeldenummer: 12001044.2
(22) Anmeldetag: 17.02.2012
(51) Int. Cl.: B60G 3/20, B60G 7/00, B60G 7/02, B62D 17/00

(54) **Radaufhängung für die Hinterräder eines Kraftfahrzeuges**
Wheel suspension for the rear wheels of a motor vehicle
Suspension de roue pour les roues arrière d'un véhicule automobile

(30) Priorität: 10.03.2011 DE 102011013484
(43) Veröffentlichungstag der Anmeldung: 12.09.2012
(73) Patentinhaber: AUDI AG, 85045 Ingolstadt (DE)
(72) Erfinder: Langhoff, Hans-Jürgen, 85101 Lenting (DE); Mohrlock, Dominik, 85053 Ingolstadt (DE); Adlkofer, Florian, 85072 Eichstätt (DE); Lamers, Stephan, 93336 Altmannstein (DE)
(74) Vertreter: Asch, Konrad

(56) Entgegenhaltungen:
- EP-A1- 0 288 654
- DE-A1- 3 642 421
- DE-B4- 10 221 993
- JP-A- 63 137 006
- JP-U- 55 001 556
- US-A- 4 545 602

## Beschreibung

Die Ereindung betrifft eine Radaufhängung für die Hinterräder eines Kraftfahrzeuges gemäß dem Oberbegriff des Patentanspruches 1.

Radaufhängungen der gattungsgemäßen Art beschreiben zum Beispiel die EP 0 288 654 A1, die JP 55 001 556 U oder die DE 102 21 993 B4, die insbesondere für angetriebene und nicht angetriebene Hinterräder von Kraftfahrzeugen konzipiert sind und ein vorteilhaftes Spur- und Sturzverhalten insbesondere unter dem Einfluss von an den Rädern wirkenden Längs- und Seitenkräften aufweisen. Die Kinematik der im Fahrbetrieb sich einstellenden Vorspurkurve wird unter anderem beeinflusst durch die Ausrichtung der aufbauseitigen Schwenkachse des unteren Querlenkers (oder Trapezlenkers) und dadurch, dass dieser über zwei Lagerstellen an dem Radträger angelenkt ist, wobei die vordere, vor der Raddrehachse positionierte Lagerstelle in Hochrichtung (Abstützung der Anfahr- und Bremskräfte) härter und in Querrichtung weicher beziehungsweise nachgiebiger ausgeführt ist. Bei der erstgenannten Schrift ist diese Lagerstelle durch eine vertikal angeordnete Koppel gebildet, die zusätzlich am Radträger angelenkt ist. Bei der zweitgenannten Schrift ist die Lagerstelle durch ein in Hochrichtung und Querrichtung unterschiedlich hart ausgebildetes, querweiches Gummilager konzipiert, das zusätzlich mit einem als Spurstange wirkenden Einzellenker gekoppelt ist.

Aufgabe der Erfindung ist es, eine Radaufhängung vorzuschlagen, die bei größeren konstruktiven Freiheitsgraden eine weitere Verbesserung der elastokinematischen Eigenschaften unter Längs- und Seitenkräften bietet.

Diese Aufgabe wird erfindungsgemäß mit den Merkmalen des Patentanspruches 1 gelöst. Vorteilhafte Weiterbildungen der Erfindung sind in den Unteransprüchen angeführt.

Gemäß dem Patentanspruch 1 weist die Radaufhängung für das Hinterrad einen Lenkerverband auf, der zumindest einen unteren Querlenker sowie eine Spurstange umfasst, die über radträgerseitige Anlenkpunkte sowie über aufbauseitige Anlenkpunkte zwischen dem Radträger des Hinterrads und dem Fahrzeug-Aufbau angebunden sind. Unter Ausübung von Längs- oder Seitenkräften auf das Hinterrad ermöglichen der untere Querlenker sowie die Spurstange eine Vorspuränderung, bei der sich unter Drehbewegung des Querlenkers sowie der Spurstange eine relative Querbewegung zwischen radträgerseitigen Anlenkpunkten des Querlenkers und dem radträgerseitigen Anlenkpunkt der Spurstange ergibt. Hierbei werden die radträgerseitigen Querlenker-Anlenkpunkte sowie der radträgerseitige Spurstangen-Anlenkpunkt um jeweils einen Querversatz in der Fahrzeugquerrichtung nach innen gezogen oder nach außen gedrückt, wodurch die gewünschte Vorspuränderung am Hinterrad erreicht wird. Gemäß dem Patentanspruch 1 ist der Querlenker sowie die Spurstange elastokinematisch derart angeordnet, dass der Querversatz des radträgerseitigen Querlenker-Anlenkpunktes größer ist als der Querversatz des radträgerseitigen Spurstangen-Anlenkpunktes. Die von dem radträgerseitigen Querlenker-Anlenkpunkt beschriebene Kreisbahn und die von dem radträgerseitigen Spurstangen-Anlenkpunkt beschriebene Kreisbahn sind daher in ihrer Lage/Kreiskrümmung zum Beispiel so ausgerichtet, dass der Radträger am radträgerseitigen Querlenker-Anlenkpunkt wesentlich stärker nach innen eingezogen werden kann als der radträgerseitige Spurstangen-Anlenkpunkt.

Da somit erfindungsgemäß der Einzug am radträgerseitigen Spurstangen-Anlenkpunkt wesentlich geringer ist als der Einzug am radträgerseitigen Querlenker-Anlenkungspunkt ergeben sich größere Freiheiten bei der Auslegung der Elastokinematik der Radaufhängung. Zudem kann der Radträger mit sehr geringem beziehungsweise ohne Querversatz des radträgerseitigen Spurstangen-Anlenkpunktes in Vorspur gebracht werden. Die Spurstange kann daher im Unterschied zum Stand der Technik in der Fahrzeugquerrichtung nicht beziehungsweise nur sehr gering gepfeilt sein, so dass sich in der Draufsicht die Spurstange nahezu parallel zur Raddrehachse erstrecken kann und der radträgerseitige Spurstangen-Anlenkpunkt sowie der aufbauseitige Spurstangen-Anlenkpunkt in der Fahrzeuglängsrichtung in etwa auf gleicher Höhe positioniert sind.

Um das oben erwähnte Spurverhalten der Radaufhängung zu erreichen, ist es bevorzugt, wenn der Drehpol des Querlenkers in der Fahrzeugquerrichtung um einen Abstand von den aufbauseitigen Querlenker-Lagerstellen beabstandet ist sowie insbesondere in einem Bereich zwischen dem Querlenker und der Fahrzeuglängsmitte positioniert ist. Zudem ist es von Vorteil, wenn der Drehpol des Querlenkers um ein Maß X vor der Raddrehachse positioniert ist.

Der oben erwähnte radträgerseitige Querlenker-Anlenkpunkt ist unter Seiten- oder Längskräfte auf einer Kreisbahn bewegbar, die über einen Radius R vom Drehpol des Querlenkers beabstandet ist. Der Radius ist hierbei erfindungsgemäß im Wesentlichen doppelt so groß wie ein Abstand zwischen dem Querlenker-Anlenkpunkt und einem Schnittpunkt zwischen der Raddrehachse und einer gemeinsamen aufbauseitigen Schwenkachse des Querlenkers sein. Zudem kann die Spurstange bevorzugt um einen vorgegebenen Abstand in der Fahrtrichtung hinter dem Querlenker angeordnet sein.

Der radträgerseitige Spurstangen-Anlenkpunkt beschreibt unter Längs-/Seitenkräften ebenfalls eine Kreisbahn, bei der sich der Spurstangen-Anlenkpunkt im Wesentlichen in einer fahrzeugparallelen Bewegungsrichtung bewegen kann. Demgegenüber kann sich erfindungsgemäß der radträgerseitige Querlenker-Anlenkpunkt unter Längs-/Seitenkräften wesentlich stärker nach innen bewegen als der radträgerseitige Spurstangen-Anlenkpunkt.

Erfindungsgemäß sind also die aufbauseitigen Lagerstellen des verwindungssteifen Querlenkers derart elastokinematisch ausgeführt, dass der Querlenker in der Draufsicht gesehen bei am Radträger wirkenden Längskräften oder Seitenkräften eine Drehbewegung erfährt, deren Drehpol M außerhalb der aufbauseitigen Lagerstellen und zur Fahrzeuglängsmitte hin liegt. Die vorgeschlagene Maßnahme bewirkt bei am Rad auftretenden Längskräften/Seitenkräften eine gezielte (begrenzte) Verdrehung des Querlenkers um eine Hochachse bzw. den Drehpol M, bei der der Anlenkpunkt, das heißt die härtere Lagerstelle, zwischen dem Radträger und dem Querlenker nach hinten wandert, wodurch eine vorteilhafte Vorspuränderung bewirkt wird. Über die geometrische Lage des Drehpols M kann gezielt die Radstellung bei Längskräften und bei Seitenkräften am Rad zusätzlich gesteuert werden.

Insbesondere kann bei der etwa in der Raddrehachse oder dahinter liegenden, radträgerseitigen, härteren Lagerstelle des Querlenkers der Drehpol M des Querlenkers um das Maß X vor der Raddrehachse positioniert sein.

In Abhängigkeit von dem Maß X kann die sich einstellende Größe der Vorspur unter Seitenkraft-Einwirkung auf das Fahrzeugrad gezielt beeinflusst werden. Das oben genannte Maß X gibt eine Hebelarmlänge zwischen der auf den Querlenker wirkenden Seitenkraft und dem Drehpol M wieder. Das unter Seitenkraft auf den Querlenker wirkende Drehmoment hängt daher vom Maß X ab. Das heißt, dass sich bei einem reduzierten Maß X eine geringere Verstellung des Fahrzeugrades in die Vorspur ergibt, und zwar verglichen mit einem größeren Maß X, bei dem bei gleicher Seitenkraft der Querlenker mit größerem Drehmoment um den Drehpol M drehbewegt wird.

Des Weiteren kann in Abhängigkeit von dem Abstand beziehungsweise Radius R zwischen der radseitigen, härteren Lagerstelle (Anlenkpunkt) und dem Drehpol M der Einfluss der Rad-Längskräfte auf die Vorspuränderung gezielt gesteuert werden. Erfindungsgemäß ist der Abstand R etwa doppelt so groß oder größer als der wirksame Hebel zwischen dieser Lagerstelle und der gemeinsamen, aufbauseitigen Schwenkachse des Querlenkers sein. Daraus resultiert eine konstruktiv und baulich einfach einstellbare Längsnachgiebigkeit des Querlenkers, die in Kombination mit ggf. zugleich auftretenden Seitenkräften eine günstige Vorspurkurve zulässt.

Allgemein gilt, dass bei Erhöhung des Abstandes R ein geringerer Quereinzug und damit eine geringere Vorspuränderung unter Längskraft am Rad erfolgt.

In konsequenter Weiterentwicklung der Radaufhängung kann die gemeinsame, aufbauseitige Drehachse des Querlenkers mit einer Pfeilung nach außen ausgerichtet sein und mit der radträgerseitigen Schwenkachse des Querlenkers und einen Schnittpunkt bilden, der den Anfahr- und Bremsnickausgleich steuern lässt.

Die die vorstehende Elastokinematik herstellenden Lagerstellen am Querlenker können zum Beispiel durch eine Kombination von Kugelgelenken und Hülsengelenken gebildet sein; bevorzugt wird jedoch vorgeschlagen, dass die aufbauseitigen Lagerstellen durch modifizierte Gummi-Metall-Hülsenlager gebildet sind, deren Drehachsen V-förmig mit nach außen, dem Radträger zu weisendem Schnittpunkt ausgerichtet sind. Die Lagerstellen sind konstruktiv so auszulegen, dass bei den auftretenden Schwenkwinkeln des Querlenkers keine örtlichen Überbelastungen (Verzwängungen) auftreten können, diese jedoch bei Längskräften eine entsprechende Drehbewegung um den eingestellten Drehpol M bewirken.

Die Gummi-Metall-Hülsenlager können des Weiteren zur Erzielung der Drehbewegung des Querlenkers um den Drehpol M in axialer Richtung gezielt weicher (nachgiebiger) als in radialer Richtung ausgelegt sein, wobei die federnden Elemente des Gummi-Metall-Hülsenlagers in axialer Richtung zwischen definierten Anschlägen nur auf Schub und in radialer Richtung auf Druck belastet sind. Damit kann eine adäquate Drehbewegung des Querlenkers in einem konstruktiv begrenzten Maße geschaffen werden, ohne die Lagerelemente in Grenzsituationen (Missbrauchsbelastung) zu überlasten.

Ein Ausführungsbeispiel der Erfindung ist im Folgenden mit weiteren Einzelheiten näher erläutert. Die schematische Zeichnung zeigt in:
- Fig. 1: eine Radaufhängung für die angetriebenen oder nicht angetriebenen Hinterräder eines Kraftfahrzeuges in raumbildlicher Darstellung; und
- Fig. 2: in skizzenhafter Darstellung eine Draufsicht auf den unteren Querlenker einer zur Fig. 1 modifizierten Radaufhängung, bei der der Querlenker über aufbauseitige Lagerstellen bei auftretenden Längskräften elastokinematisch um einen Drehpol M verlagerbar ist.

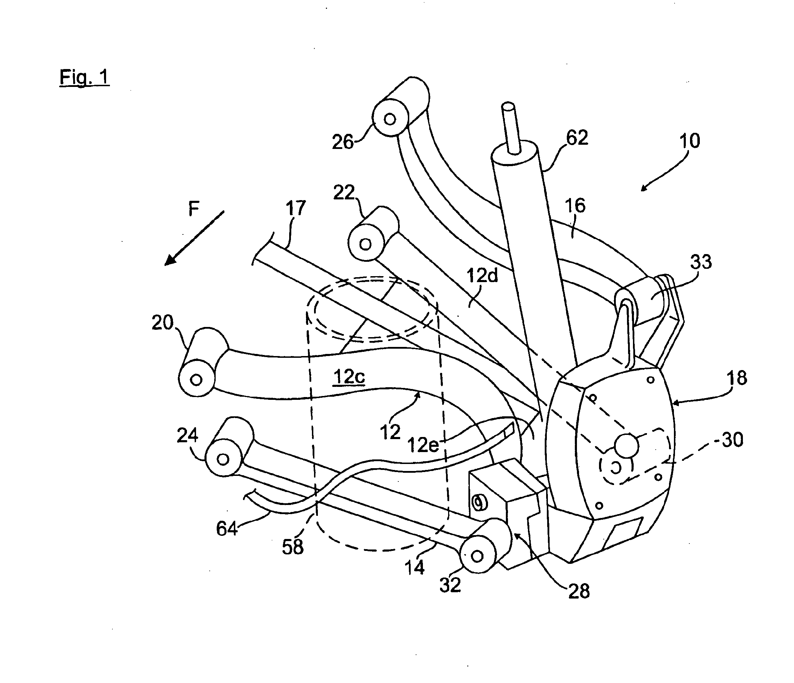

Die Fig. 1 zeigt den grundsätzlichen Aufbau einer linksseitigen Radaufhängung 10 für die Räder eines Kraftfahrzeuges, die sich im Wesentlichen aus einem unteren, verwindungssteifen Querlenker 12 (oder Trapezlenker), zwei mehr oder weniger darüber positionierten, weiteren Einzellenkern 14, 16 und einem Radträger 18 zusammensetzt. Im Radträger 18 ist das in Fig. 1 der besseren Übersichtlichkeit wegen nicht gezeigte Hinterrad drehbar gelagert, das ferner mittels einer nur teilweise dargestellten Antriebswelle 17 angetrieben ist. Die Vorwärts-Fahrtrichtung des Kraftfahrzeuges ist lediglich beispielhaft mit dem Pfeil F angegeben.

Die angeführten Lenker 12, 14, 16 sind über erste Lagerstellen 20, 22, 24, 26 am Aufbau oder an einem Hilfsrahmen des Kraftfahrzeuges über übliche Gummi-Metall-Hülsenlager angelenkt, wobei die Lagerstellen 20, 22 des unteren Querlenkers 12 eine einheitliche Schwenkachse bilden. Der Querlenker 12 ist aus zwei rohrförmigen Lenkerteilen 12c, 12d und einem eingeschweißten Verbindungsblech 12e dargestellt.

Die Lenker 12, 14, 16 sind ferner über Lagerstellen 28, 30, 32, 33 mit dem Radträger 18 gelenkig verbunden, wobei wiederum die Lagerstellen 28, 30 des unteren Querlenkers 12 eine gemeinsame radträgerseitige Schwenkachse bilden. Die beiden Schwenkachsen (nicht eingezeichnet) des Querlenkers 12 verlaufen dabei konvergierend zur Fahrtrichtung F des Kraftfahrzeuges.

Während die Lagerstellen 30, 32, 33 wiederum herkömmliche Gummi-Metall-Hülsenlager sind, ist die vor der Raddrehachse liegende Lagerstelle 28, wie in der eingangs genannten DE 102 21 993 B4 detailliert beschrieben, ein kombiniertes Lager, das in Hochrichtung härter und in Querrichtung des Kraftfahrzeuges nachgiebiger beziehungsweise weicher als die hinter der Raddrehachse liegende Lagerstelle 30 des Querlenkers 12 ist.

Die Radaufhängung 10 weist wie angedeutet einen am Radträger 18 angreifenden Teleskop-Stoßdämpfer 62, eine Tragfeder 58 und einen die Radaufhängungen der beiden Seiten des Kraftfahrzeuges verbindenden Stabilisator 64 auf.

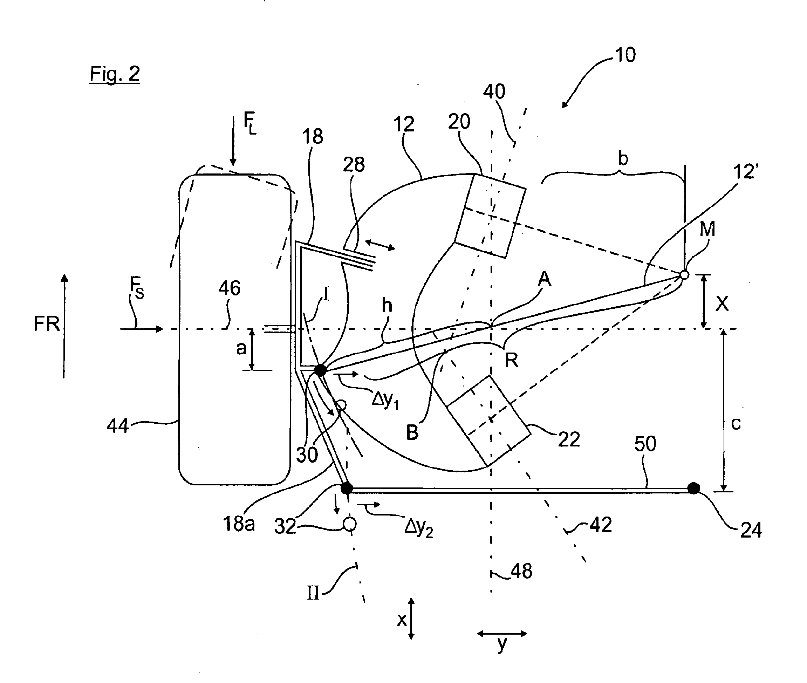

Ausgehend von der in der Fig. 1 beschriebenen Radaufhängung 10 zeigt die Fig. 2 in einem Ersatzmodell den unteren, verwindungssteifen Querlenker 12, der über modifizierte Lagerstellen 20, 22 am Aufbau oder Hilfsrahmen (nicht dargestellt) des Kraftfahrzeuges angelenkt ist, während die radträgerseitigen Lagerstellen 28, 30 wie vorstehend ausgeführt sind. Das heißt, dass die um einen Abstand (a) knapp hinter der eingezeichneten Raddrehachse 46 liegende Lagerstelle 30 relativ hart (unnachgiebig) ausgelegt ist, und bei einer nachfolgend beschriebenen Vorspuränderung als Anlenkpunkt dient. Die mit größerem Abstand vor der Raddrehachse 46 liegende Lagerstelle 28 ist wie in der Fig. 1 in Hochrichtung hart und in Querrichtung weich (nachgiebig) konzipiert (nur skizzenhaft dargestellt). Die querweiche Lagerstelle 28 bewirkt eine Bremsmoment-Abstützung. Das heißt, dass die Lagerstelle 28 in der Hochrichtung z zwar stützt, jedoch ansonsten keinen oder nur einen geringfügigen Einfluss auf die Vorspuränderung des Radträgers 18 hat.

Die Lagerstellen 20, 22 sind als modifizierte Gummi-Metall-Hülsenlager ausgeführt, deren interne Drehachsen 40, 42 derart V-förmig mit einem zum Radträger 18 weisenden Schnittpunkt (B) ausgerichtet sind, dass sich für den Querlenker 12 bei Längskräften oder Seitenkräften am Rad 44 (durch Pfeile angedeutet) bzw. am Radträger 18 eine Verdrehung um eine Hochachse bzw. um einen Drehpol M einstellt. Der Drehpol M liegt wie ersichtlich in der Fahrzeugquerrichtung y um einen Abstand b innerhalb der Lagerstellen 20, 22 und der Fahrzeuglängsachse zugewandt.

Die Ausrichtung der internen Drehachsen 40, 42 ist dabei nicht symmetrisch zur Raddrehachse 46, sondern derart, dass der Drehpol M um ein Maß X vor der Raddrehachse 46 liegt und dass ferner der Abstand R zwischen der härteren, radträgerseitigen Lagerstelle 30 und dem Drehpol M eine Länge von ca. dem zweifachen Abstand h zwischen der Lagerstelle 30 und einem Schnittpunkt A zwischen der Raddrehachse 46 und der durch die beiden aufbauseitigen Lagerstellen 20, 22 gebildeten, gemeinsamen Schwenkachse 48 des Querlenkers 12 beträgt.

Die Schwenkachse 48 des Querlenkers 12 verläuft zudem nach vorne außen, während die durch die Lagerstellen 28, 30 des Radträgers 18 verlaufende Schwenkachse bevorzugt nach vorne innen verläuft.

Die als Gummi-Metall-Hülsenlager an sich bekannter Bauart ausgelegten Lagerstellen 20, 22 sind axial weicher sowie radial härter, sodass trotz einer definierten Längsnachgiebigkeit eine exakte Radführung sichergestellt ist. Die Längsnachgiebigkeit kann in nicht dargestellter Weise durch axial wirkende Anschläge definiert begrenzt sein.

Dies wird bevorzugt dadurch erreicht, dass die federnden Elemente (gummielastische Buchsen) der Hülsenlager in axialer Richtung vermehrt auf Schub und in radialer Richtung (Querrichtung) auf Druck belastet sind. Die axiale Nachgiebigkeit kann durch eingesetzte, auf Druck belastete Anschlagringe gezielt begrenzt sein.

Ferner sind die Gummi-Metall-Hülsenlager so konstruiert, dass sie über den aus der Konstruktionslage des Querlenkers 12 heraus auftretenden, positiven und negativen Schwenkwinkel nicht unzulässig verzwängt und verhärtet werden.

An dem Radträger 18 ist ein nach hinten abragender Lenkarm 18a vorgesehen, der mit einer Spurstange 50 zusammenwirkt und der in Höhe des Querlenkers 12 oder geringfügig darüber liegend ebenfalls am Aufbau des Kraftfahrzeuges angelenkt ist. Die Lagerstellen der Spurstange 50 sind wie in Fig. 1 mit 24 und 32 bezeichnet.

In dem, in der Fig. 2 gezeigten Ersatzmodell ist zum einfacheren Verständnis neben dem trapezförmigen Querlenker 12 dessen theoretischer Ersatzlenker 12' mit einer Lenkerersatz-Linie angedeutet, die sich vom Drehpol M bis zum radträgerseitigen Anlenkpunkt 30 erstreckt. Wie aus der Fig. 2 weiter hervorgeht, erfolgt unter Ausübung von Längs- oder Seitenkräften F_{L}, F_{S} eine mit gestrichelter Linie übertrieben angedeutete Vorspuränderung des Hinterrads 44. Bei der Vorspuränderung wandert der radträgerseitige Querlenker-Anlenkpunkt 30 entlang einer Kreisbahn I entgegen der Fahrtrichtung FR nach hinten. Zugleich wandert der radträgerseitige Spurstangen-Anlenkpunkt 32 entlang einer Kreisbahn II ebenfalls nach hinten entgegen der Fahrtrichtung FR.

Durch die spezielle elastokinematische Anordnung des Drehpols M sowie der aufbauseitigen Querlenker-Lagerstellen 20, 22 ist in der Fig. 2 die Kreisbahn I wesentlich stärker nach innen geneigt als die Kreisbahn II des radträgerseitigen Spurstangen-Anlenkpunktes 32. Entsprechend wird daher unter Längs-/Seitenkräften F_{L}, F_{S} der radträgerseitige Querlenker-Anbindungspunkt 30 um einen wesentlich größeren Querversatz Δ y₁ eingezogen als der radträgerseitige Spurstangen-Anlenkpunkt 32, der um einen geringeren Querversatz Δy₂ eingezogen wird oder sich nahezu ohne Einzug in der Fahrzeuglängsrichtung x bewegt. Erfindungsgemäß kann daher die Vorspuränderung mit sehr geringem Querversatz Δy₂ beziehungsweise ohne Querversatz des aufbauseitigen Spurstangen-Anlenkpunktes 32 erreicht werden. Dadurch ergibt sich die Möglichkeit, die Spurstange 50 raumsparend mit lediglich einer geringen Pfeilung sowie über einen geringen Abstand c parallel zur Raddrehachse 46 anzuordnen, wie es in der Fig. 2 gezeigt ist.

Die Kinematik der Radaufhängung 10 mit der Modifikation gemäß Fig. 2 ist in vorteilhafter Weise neben den bekannten Maßnahmen (Kennwerte der Lagerstellen, Hebellängen, räumliche Lenkerausrichtungen, etc.) einstellbar über das Maß X des Drehpols M und den Abstand R, die die Größe (Spurwinkel) der Radstellung unter Seitenkraft und unter Längskraft mit bestimmen.

## Patentansprüche

1. Radaufhängung für ein Hinterrad (44) eines Kraftfahrzeugs, mit einem unteren Querlenker (12) und einer Spurstange (50), die über radträgerseitige Anlenkpunkte (30, 32) und über aufbauseitige Lager (20, 22, 24) am Radträger (18) des Hinterrads (44) und am Fahrzeug-Aufbau angebunden sind, und unter Ausübung von Längs- und/oder Seitenkräften (F_{L}, F_{S}) eine Vorspuränderung bewirken, bei der sich unter Drehbewegung (I, II) des Querlenkers (12) und der Spurstange (50) die radträgerseitigen Anlenkpunkte (30, 32) des Querlenkers (12) und der Spurstange (50) um jeweils einen Querversatz (Δy₁, Δy₂) in der Fahrzeugquerrichtung (y) verstellen, wobei die aufbauseitigen Lagerstellen (20, 22) des Querlenkers (12) derart elastokinematisch angeordnet sind, dass der radträgerseitige Querlenker-Anlenkpunkt (30) unter Ausübung der Längs- und/oder Seitenkräfte (F_{L}, F_{S}) eine Kreisbahn (I) beschreibt, die über einen Radius (R) von einem Drehpol (M) des Querlenkers (12) beabstandet ist, und der Querversatz (Δy₁) des radträgerseitigen Anlenkpunktes (30) des Querlenkers (12) größer ist als der Querversatz (Δy₂) des radträgerseitigen Anlenkpunkts (32) der Spurstange (50), **dadurch gekennzeichnet, dass** der Querlenker-Anlenkpunkt (30) um einen Abstand (a) hinter der Raddrehachse (46) liegt, und dass der Radius (R) der Kreisbahn (I) doppelt so groß oder größer als ein Abstand (h) zwischen dem Querlenker-Anlenkpunkt (30) und einem Schnittpunkt (A) zwischen der Raddrehachse (46) und einer, durch die beiden aufbauseitigen Lagerstellen (20, 22) gebildeten gemeinsamen aufbauseitigen Schwenkachse (48) des Querlenkers (12) ist.

2. Radaufhängung nach Anspruch 1, **dadurch gekennzeichnet, dass** die Spurstange (50) parallel zur Raddrehachse (46) ausrichtbar ist.

3. Radaufhängung nach Anspruch 1 oder 2, **dadurch gekennzeichnet, dass** der Drehpol (M) des Querlenkers (12) in der Fahrzeugquerrichtung (y) um einen Abstand (b) von den aufbauseitigen Querlenker-Lagerstellen (20, 22) beabstandet sowie zwischen dem Querlenker (12) und der Fahrzeuglängsmitte liegt.

4. Radaufhängung nach einem der Ansprüche 1 bis 3, **dadurch gekennzeichnet, dass** der Drehpol (M) des Querlenkers (12) um ein Maß (X) vor der Raddrehachse (46) positioniert ist.

5. Radaufhängung nach einem der vorhergehenden Ansprüche, **dadurch gekennzeichnet, dass** der radträgerseitige Spurstangen-Anlenkpunkt (32) unter Ausübung von Seitenkräften (F_{L}, F_{S}) eine Kreisbahn (II) beschreibt, bei der sich der Spurstangen-Anlenkpunkt (32) in fahrzeugparalleler Bewegungsrichtung (x) bewegt.

6. Radaufhängung nach einem der vorhergehenden Ansprüche, **dadurch gekennzeichnet, dass** die Spurstange (50) um einen Abstand (c) in der Fahrtrichtung (FR) hinter dem Querlenker (12) angeordnet ist.

7. Radaufhängung nach einem der vorhergehenden Ansprüche, **dadurch gekennzeichnet, dass** der radträgerseitige Querlenker-Anlenkpunkt (30) unter Ausübung von Längs-/Seitenkräften (F_{L}, F_{S}) um den Querversatz (Δy₁) in der Fahrzeugquerrichtung (y) nach innen gezogen wird.

8. Radaufhängung nach einem der vorhergehenden Ansprüche, **dadurch gekennzeichnet, dass** der radträgerseitige Spurstangen-Anlenkpunkt (32) unter Ausübung von Längs-/Seitenkräften (F_{L}, F_{S}) um den Querversatz (Δy₂) in der Fahrzeugquerrichtung (y) nach innen gezogen wird.

9. Radaufhängung nach einem der vorhergehenden Ansprüche, **dadurch gekennzeichnet, dass** die aufbauseitigen Lagerstellen (20, 22) durch Gummi-Metall-Hülsenlager gebildet sind, deren Drehachsen (40, 42) V-förmig mit einem nach außen, dem Radträger (18) zu weisenden Schnittpunkt ausgerichtet sind.

10. Radaufhängung nach Anspruch 9, **dadurch gekennzeichnet, dass** die Gummi-Metall-Hülsenlager (20, 22) zur Erzielung der Drehbewegung (I) des Querlenkers (12) um den Drehpol (M) in axialer Richtung nachgiebiger als in radialer Richtung ausgelegt sind.

11. Radaufhängung nach Anspruch 9 oder 10, **dadurch gekennzeichnet, dass** die federnden Elemente des Gummi-Metall-Hülsenlagers (20, 22) in axialer Richtung zwischen definierten Anschlägen nur auf Schub und in radialer Richtung auf Druck belastet sind.

12. Radaufhängung nach einem der vorhergehenden Ansprüche, **dadurch gekennzeichnet, dass** die Radaufhängung zumindest einen weiteren Einzellenker (16) aufweist.

## Claims

1. Wheel suspension for a rear wheel (44) of a motor vehicle, comprising a lower control arm (12) and a track rod (50) which are connected via wheel-carrier-side articulation points (30, 32) and via body-side bearings (20, 22, 24) to the wheel carrier (18) of the rear wheel (44) and to the vehicle body and, in response to longitudinal and/or lateral forces (F_{L}, F_{S}), cause a toe-in change, in which the wheel-carrier-side articulation points (30, 32) of the control arm (12) and of the track rod (50) are each adjusted by a transverse offset (Δy₁, Δy₂) in the vehicle transverse direction (y) in response to a rotational movement (I, II) of the control arm (12) and of the track rod (50), wherein the body-side bearing points (20, 22) of the control arm (12) are arranged elastokinematically such that, in response to the longitudinal and/or lateral forces (F_{L}, F_{S}), the wheel-carrier-side articulation point (30) of the control arm describes a circular path (I) which is spaced via a radius (R) from a centre of rotation (M) of the control arm (12), and the transverse offset (Δy₁) of the wheel-carrier-side articulation point (30) of the control arm (12) is greater than the transverse offset (Δy₂) of the wheel-carrier-side articulation point (32) of the track rod (50), **characterised in that** the control arm articulation point (30) is located behind the wheel rotation axis (46) by a distance (a), and **in that** the radius (R) of the circular path (I) is twice as long or longer than a distance (h) between the control arm articulation point (30) and an intersection point (A) between the wheel rotation axis (46) and a common body-side pivot axis (48) of the control arm (12), which pivot axis is formed by the two body-side bearing points (20, 22).

2. Wheel suspension according to claim 1, **characterised in that** the track rod (50) can be oriented parallel to the wheel rotation axis (46).

3. Wheel suspension according to either claim 1 or claim 2, **characterised in that** the centre of rotation (M) of the control arm (12) is spaced from the body-side bearing points (20, 22) of the control arm by a distance (b) in the vehicle transverse direction (y) and is located between the control arm (12) and the longitudinal centreline of the vehicle.

4. Wheel suspension according to any of claims 1 to 3, **characterised in that** the centre of rotation (M) of the control arm (12) is positioned in front of the wheel rotation axis (46) by a measurement (X).

5. Wheel suspension according to any of the preceding claims, **characterised in that** the wheel-carrier-side articulation point (32) of the track rod describes, in response to lateral forces (F_{L}, F_{S}), a circular path (II) in which the track rod articulation point (32) moves in a movement direction (x) parallel to the vehicle.

6. Wheel suspension according to any of the preceding claims, **characterised in that** the track rod (50) is arranged behind the control arm (12) by a distance (c) in the travel direction (FR).

7. Wheel suspension according to any of the preceding claims, **characterised in that** the wheel-carrier-side articulation point (30) of the control arm is drawn inwards by the transverse offset (Δy₁) in the vehicle transverse direction (y) in response to longitudinal/lateral forces (F_{L}, F_{S}).

8. Wheel suspension according to any of the preceding claims, **characterised in that** the wheel-carrier-side articulation point (32) of the track rod is drawn inwards by the transverse offset (Δy₂) in the vehicle transverse direction (y) in response to longitudinal/lateral forces (F_{L}, F_{S}).

9. Wheel suspension according to any of the preceding claims, **characterised in that** the body-side bearing points (20, 22) are formed by rubber-metal sleeve bearings, the rotation axes (40, 42) of which are oriented in a V-shaped configuration with an intersection point which faces outwards towards the wheel carrier (18).

10. Wheel suspension according to claim 9, **characterised in that** the rubber-metal sleeve bearings (20, 22) are configured to be more resilient in an axial direction than in a radial direction in order to achieve the rotational movement (I) of the control arm (12) about the centre of rotation (M).

11. Wheel suspension according to either claim 9 or claim 10, **characterised in that** the resilient elements of the rubber-metal sleeve bearings (20, 22) are subjected to thrust only in an axial direction between defined stops and to compression in a radial direction.

12. Wheel suspension according to any of the preceding claims, **characterised in that** the wheel suspension comprises at least one further individual link (16).

## Revendications

1. Suspension de roue pour une roue arrière (44) d'un véhicule automobile, comprenant un bras de suspension transversal inférieur (12) et une barre d'accouplement (50), qui sont raccordés via des points d'articulation côté support de roue (30, 32) et via des paliers côté structure (20, 22, 24) sur le support de roue (18) de la roue arrière (44) et sur la structure du véhicule, et, en exerçant des forces longitudinales et/ou latérales (F_{L}, F_{S}) , provoquent une modification du pincement des roues avant, dans lequel, par déplacement en rotation (I, II) du bras de suspension transversal (12) et de la barre d'accouplement (50), les points d'articulation côté support de roue (30, 32) du bras de suspension transversal et de la barre d'accouplement (50) effectuent respectivement un déport transversal (Δy₁, Δy₂) dans la direction transversale (y) du véhicule, dans lequel les paliers (20, 22) côté structure du bras de suspension transversal (12) sont aménagés au plan élastocinématique de sorte que le point d'articulation (30) du bras de suspension transversal côté support de roue décrive, en exerçant les forces longitudinales et/ou latérales (F_{L}, F_{S}), une trajectoire circulaire (I), qui est distante d'un rayon (R) d'un pôle de rotation (M) du bras de suspension transversal (12), et le déport transversal (Δy₁) du point d'articulation côté support de roue (30) du bras de suspension transversal (12) est plus grand que le déport transversal (Δy₂) du point d'articulation côté support de roue (32) de la barre d'accouplement (50), **caractérisée en ce que** le point d'articulation (30) du bras de suspension transversal est à une distance (a) derrière l'essieu de roue (46) et **en ce que** le rayon (R) du trajet circulaire (I) est le double ou plus par rapport à une distance (h) entre le point d'articulation (30) du bras de suspension transversal et un point de coupe (A) entre l'essieu de roue (46) et un axe pivot (48) côté structure du bras de suspension transversal (12) conjoint formé par les deux paliers côté structure (20, 22).

2. Suspension de roue selon la revendication 1, **caractérisée en ce que** la barre d'accouplement (50) peut être orientée parallèlement à l'essieu de roue (46).

3. Suspension de roue selon la revendication 1 ou la revendication 2, **caractérisée en ce que** le pôle de rotation (M) du bras de suspension transversal (12) se trouve, dans la direction (y) transversale du véhicule, à une distance (b) des paliers (20, 22) du bras de suspension transversal côté structure ainsi qu'entre le bras de suspension transversal (12) et le centre longitudinal du véhicule.

4. Suspension de roue selon l'une quelconque des revendications 1 à 3, **caractérisée en ce que** le pôle de rotation (M) du bras de suspension transversal (12) est positionné à une distance (X) de l'essieu de roue (46).

5. Suspension de roue selon l'une quelconque des revendications précédentes, **caractérisé en ce que** le point d'articulation (32) de la barre d'accouplement côté support de roue décrit, ex exerçant des forces latérales (F_{L}, F_{S}), une trajectoire circulaire (II), dans laquelle le point d'articulation (32) de la barre d'accouplement se déplace dans la direction de déplacement (x) parallèle au véhicule.

6. Suspension de roue selon l'une quelconque des revendications précédentes, **caractérisée en ce que** la barre d'accouplement (50) est aménagée à une distance (c) derrière le bras de suspension transversal (12) dans la direction d'avancement (FR).

7. Suspension de roue selon l'une quelconque des revendications précédentes, **caractérisée en ce que** le point d'articulation (30) de la barre d'accouplement côté support de roue est tiré vers l'intérieur du déport transversal (Δy₁) dans la direction transversale (y) du véhicule en exerçant des forces longitudinales/latérales (F_{L}, F_{S}).

8. Suspension de roue selon l'une quelconque des revendications précédentes, **caractérisée en ce que** le point d'articulation (32) de la barre d'accouplement côté support de roue est tiré vers l'intérieur du déport transversal (Δy₂) dans la direction transversale (y) du véhicule en exerçant des forces longitudinales/latérales (F_{L}, F_{S}).

9. Suspension de roue selon l'une quelconque des revendications précédentes, **caractérisée en ce que** les paliers côté structure (20, 22) sont formés par des paliers en douille de caoutchouc-métal, dont les axes de rotation (40, 42) sont orientés en forme de V avec un point d'intersection tourné vers le support de roue (18) vers l'extérieur.

10. Suspension de roue selon la revendication 9, **caractérisé en ce que** les paliers en douille de caoutchouc-métal (20, 22) sont dimensionnés pour assurer le mouvement de rotation (I) du bras de suspension transversal (12) autour du pôle de rotation (M) dans la direction axiale de manière plus souple que dans la direction radiale.

11. Suspension de roue selon la revendication 9 ou la revendication 10, **caractérisée en ce que** les éléments élastiques du palier en douille de caoutchouc-métal (20, 22) sont sollicités dans la direction axiale entre des butées définies uniquement au cisaillement et dans la direction radiale à la pression.

12. Suspension de roue selon l'une quelconque des revendications précédentes, **caractérisée en ce que** la suspension de roue présente au moins un autre bras de suspension individuel (16).
